# EUROPEAN PATENT SPECIFICATION

(11) **EP 2 724 286 B1**
(45) Date of publication and mention of the grant of the patent: **18.04.2018**
(21) Application number: 11751981.9
(22) Date of filing: 27.07.2011
(51) Int. Cl.: G06F 21/73, G07F 7/10

(54) **METHOD FOR PROVISIONING CRYPTOGRAPHIC KEYS DURING MANUFACTURING**
VERFAHREN ZUR BEREITSTELLUNG VON KRYPTOGRAFISCHEN SCHLÜSSELN WÄHREND DER HERSTELLUNG
PROCÉDÉ PERMETTANT DE FOURNIR DES CLÉS CRYPTOGRAPHIQUES LORS DE LA FABRICATION

(43) Date of publication of application: 30.04.2014
(73) Proprietor: Certicom Corp., Mississauga, Ontario L4W 0B5 (CA); BlackBerry Limited, Waterloo, ON N2K 0A7 (CA)
(72) Inventor: BOWMAN, Roger, Paul, Waterloo, Ontario N2L 3W8 (CA); LAMBERT, Robert, John, Mississauga, Ontario L4W 5L1 (CA); WOOD, Robert, Henderson, Waterloo, Ontario N2L 3W8 (CA); CAMPAGNA, Matthew, John, Ridgefield, CT 06877 (US); LAMB, Brian, Kitchener, Ontario N2C 2R8 (CA)
(74) Representative: Hanna Moore + Curley
(86) International application number: PCT/US2011/045553
(87) International publication number: WO 2013/015806

(56) References cited:
- WO-A2-99/19846
- US-A1- 2007 095 927

## Description

### Field of the Invention

This invention relates to a method for provisioning cryptographic keys to a computing device during manufacture of the device.

### Background of the Invention

Cryptography is an established method for protecting information handled by a computing device. One problem for ensuring secure communications is the establishment of a secure private key known only to the computing device. A secret private key forms the basis for secure communications conducted by the device. The private key may be used as a seed to generate additional cryptographic keys, private or public, as required for the computing device to carry out cryptographic operations.

One known method for establishing a private key is to create and insert the private key during manufacture of the computing device. This process does weaken the private key in that computing devices are typically manufactured and assembled by third party vendors. An unscrupulous or lax vendor could compromise the computing device if the private key inserted by the vendor is not kept secret. Patent application US 2007/0095927 A1 discloses a system and method for initializing secure elements for use in mobile devices. An initialization routine configures the secure element by creating issuer-specific and chip-specific keys based on its pre-installed root keys, unique chip serial number and an issuer seed.

There is a need for a method of manufacturing a computing device that improves the security of the private key.

### Brief Description of the Drawings

In drawings which illustrate by way of example only a preferred embodiment of the invention,
FIG. 1 is a block diagram of an embodiment of a mobile device.
FIG. 2 is a block diagram of an embodiment of a communication subsystem component of the mobile device of FIG. 1.
FIG. 3 is a block diagram of an embodiment of a method of manufacture.
FIG. 4 is a process diagram of an embodiment of a method of manufacture.
FIGS. 5a, b & c are process diagrams of embodiments of a method of manufacture.

### Detailed Description of the Invention

In an embodiment, a method for manufacturing a computing device is provided. The method may comprise assembling a processing unit including a processor random seed at a first manufacturing location; assembling the processing unit on a board; injecting a board random seed into the assembled board at a second manufacturing location; and, the processing unit combining the processor random seed and the board random seed to generate a private key. In an aspect, the processing unit may store the private key.

In an embodiment, the injecting at the first manufacturing location may comprise connecting the processing unit to a processor appliance; querying the processing unit for a processor identifier; generating the processor random seed; combining the processor random seed and the processor identifier to generate a processor message; encrypting the processor message; injecting the encrypted message into the processing unit; and, fixing a functionality of the processing unit.

In an embodiment, the injecting at the second manufacturing location may comprise connecting the assembled board to a board appliance; querying the processing unit for a processor identifier; comparing the processor identifier with a list of validated processor identifiers received from the first manufacturing location and if the processor identifier matches a validated processor identifier, generating the board random seed and combining the board random seed and the processor identifier to generate a board message, and injecting the board message into the processing unit on the assembled board; the processing unit verifying that the processor identifier received in the board message matches the processor identifier of the processing unit and, if the processor identifier is matched, the processing unit combining the processor random seed and the board random seed to generate the private key. In an aspect, the processing unit may combine the processor random seed and the board random seed by generating a random value and combining the random value with the processor random seed and the board random seed. In an aspect, after the processing unit generates the private key, the processing unit may store the private key either within a data store of the processing unit or in a secure data store of the assembled board.

In an embodiment, the injecting at the first manufacturing location may comprise connecting the processing unit to a processor appliance; querying the processing unit for a processor identifier; generating the processor random seed; generating a processor digital signature based on the processor random seed and the processor identifier; combining the processor random seed, the processor identifier and the processor digital signature to generate a processor message; encrypting the processor message with a processor cryptographic key; injecting the encrypted message and the processor cryptographic key into the processing unit; and, fixing a functionality of the processing unit. In an aspect, the injecting at the second manufacturing location may comprise connecting the assembled board to a board appliance; querying the processing unit for a processor identifier; comparing the processor identifier with a list of validated processor identifiers received from the first manufacturing location and if the processor identifier matches a validated processor identifier, generating the board random seed and combining the board random seed, the processor cryptographic key and the processor identifier to generate a board message, and injecting the board message into the processing unit on the assembled board; the processing unit decrypting the processor message with the processor cryptographic key, verifying that the processor identifier received in the board message matches the processor identifier of the processing unit and verifying the processor digital signature, and if the processor identifier and the processor digital signature are verified, the processing unit combining the processor random seed and the board random seed to generate the private key. In an aspect, if the processor identifier and the processor digital signature are not verified, the processing unit may return an error code to the board appliance.

In an embodiment, the combining the processor random seed and the board random seed to generate a private key may comprise the processor applying the processor random seed and the board random seed as inputs to one of an XOR operation, a concatenation operation, a key derivation function or a cryptographic hash operation, the output comprising the private key.

In an embodiment, the method may further comprise the processing unit generating a cryptographic key for a cryptographic operation using the generated private key as a cryptographic seed for input to a cryptographic key generation operation. In an aspect, the cryptographic key generation operation comprises a pseudo random number generator. In an aspect, the processing unit may encrypt the private key using the generated cryptographic key and storing the encrypted private key on a data store of the computing device. In an aspect, the cryptographic operation may comprise a public key generation operation.

In an embodiment, a computing device may be provided that is manufactured using any of the above methods.

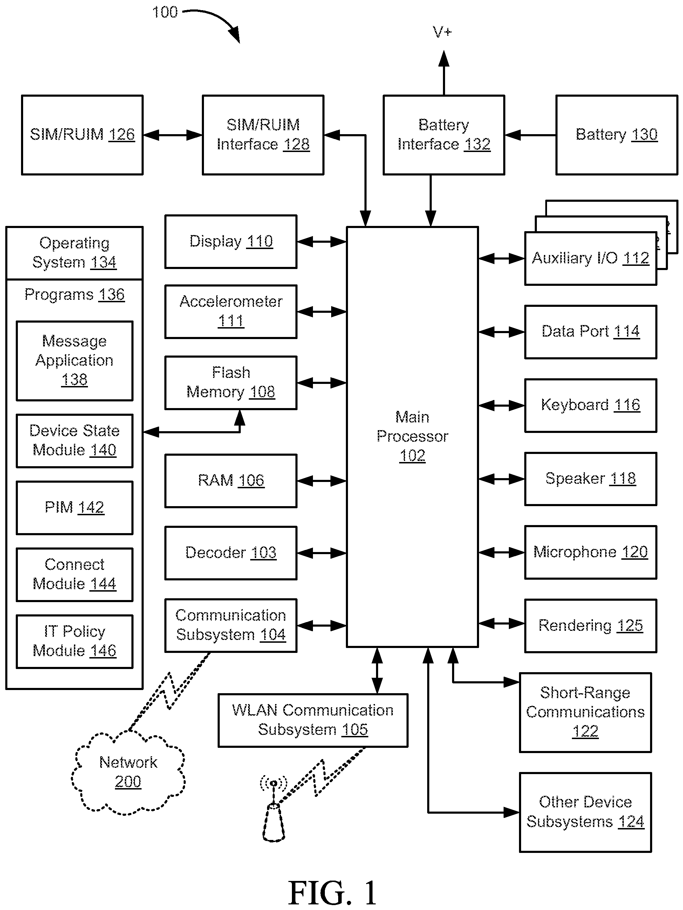

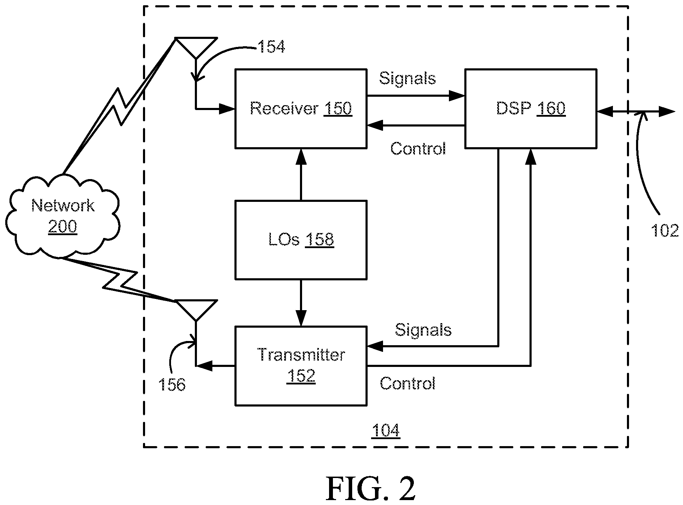

The embodiments described herein may be implemented on a computing device, for instance as a communication device such as that illustrated in FIGS. 1 and 2. The communication device may communicate with other devices over a wireless communication system or enterprise system. The communication device 100 may be a mobile device with two-way communication and advanced data communication capabilities including the capability to communicate with other mobile devices or computer systems through a network of transceiver stations. The communication device 100 can also have voice communication capabilities.

FIG. 1 is a block diagram of an exemplary embodiment of a communication device 100. The communication device 100 includes a number of components such as a main processor 102 that controls the overall operation of the communication device 100. Communication functions, including data and voice communications, are performed through a communication subsystem 104. Data received by the communication device 100 can be decompressed and decrypted by decoder 103, operating according to any suitable decompression techniques, and encryption/decryption techniques according to various standards, such as symmetric algorithms, including for instance Data Encryption Standard (DES), Triple DES, or Advanced Encryption Standard (AES)), and asymmetric algorithms, including for instance RSA, ECC, etc... Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this exemplary embodiment of the communication device 100, the communication subsystem 104 is configured in accordance with communication standards such as, for instance, and one or more of Code Division Multiples Access (CDMA), Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the communication device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE, HSPA, HSPA+, EVDO and UMTS, or fourth-generation (4G) networks such as LTE and LTE Advanced. Some other examples of data-centric networks include WiFi 802.11™, Mobitex™ and DataTAC™ network communication systems. Examples of other voice-centric data networks include Personal Communication Systems (PCS) networks like GSM and Time Division Multiple Access (TDMA) systems. The mobile device 100 may be provided with additional communication subsystems, such as the wireless LAN (WLAN) communication subsystem 105 also shown in FIG. 1. The WLAN communication subsystem may operate in accordance with a known network protocol such as one or more of the 802.11™ family of standards developed by IEEE. The communication subsystem 105 may be separate from, or integrated with, the communication subsystem 104 or with the short-range communications module 122. The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, the short-range communications 122 and other device subsystems 124. The communication device may also be provided with an accelerometer 111, which may be used to detect gravity- or motion-induced forces and their direction. Detection of such forces applied to the device 100 may be processed to determine a response of the device 100, such as an orientation of a graphical user interface displayed on the display assembly 110 in response to a determination of the current orientation of which the device 100.

Some of the subsystems of the communication device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

A rendering circuit 125 is included in the device 100. When a user specifies that a data file is to be viewed on the display 110, the rendering circuit 125 analyzes and processes the data file for visualization on the display 110. Rendering data files originally optimized or prepared for visualization on large-screen displays on a portable electronic device display often requires additional processing prior to visualization on the small-screen portable electronic device displays. This additional processing may be accomplished by the rendering engine 125. As will be appreciated by those of skill in the art, the rendering engine can be implemented in hardware, software, or a combination thereof, and can comprise a dedicated image processor and associated circuitry, or can be implemented within main processor 102.

The communication device 100 can send and receive communication signals over the wireless network 200 after required network registration or activation procedures have been completed. Network access is associated with a subscriber or user of the communication device 100. To identify a subscriber, the communication device 100 requires a SIM/RUIM card 126 (i.e. Subscriber Identity Module or a Removable User Identity Module) or another suitable identity module to be inserted into a SIM/RUIM interface 128 in order to communicate with a network. The SIM/RUIM card 126 is one type of a conventional "smart card" that can be used to identify a subscriber of the communication device 100 and to personalize the communication device 100, among other things. Without the SIM/RUIM card 126, the communication device 100 is not fully operational for communication with the wireless network 200. By inserting the SIM/RUIM card 126 into the SIM/RUIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical mobile device. The SIM/RUIM card 126 can store additional subscriber information for a mobile device as well, including datebook (or calendar) information and recent call information. Alternatively, user identification information can also be programmed into the flash memory 108.

The communication device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the communication device 100. Although current technology makes use of a battery, future technologies such as micro fuel cells can provide the power to the communication device 100.

The communication device 100 also includes an operating system 134 and software components 136 to 146 which are described in more detail below. The operating system 134 and the software components 136 to 146 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 146, such as specific device applications, or parts thereof, can be temporarily loaded into a volatile store such as the RAM 106. Other software components can also be included, as is well known to those skilled in the art.

The subset of software applications 136 that control basic device operations, including data and voice communication applications, will normally be installed on the communication device 100 during its manufacture. Other software applications include a message application 138 that can be any suitable software program that allows a user of the communication device 100 to send and receive electronic messages. Various alternatives exist for the message application 138 as is well known to those skilled in the art. Messages that have been sent or received by the user are typically stored in the flash memory 108 of the communication device 100 or some other suitable storage element in the communication device 100. In at least some embodiments, some of the sent and received messages can be stored remotely from the device 100 such as in a data store of an associated host system that the communication device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the communication device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the communication device 100 with respect to such items. This can be particularly advantageous when the host computer system is the mobile device subscriber's office computer system. Some or all of the data items stored at the communication device 100 may be indexed for searching on the device 100 either through a corresponding application, such as the PIM 142, or another suitable module. In addition, the items may be searchable using a unified search process implemented in the device operating system 134. For example, application data items can be encapsulated in a searchable entity class and registered with a unified search engine on the device 100 that executes searches against all registered data repositories on the device based on received queries. The search engine can also be configured to invoke a search process of external resources, such as Internet search engines or remote databases.

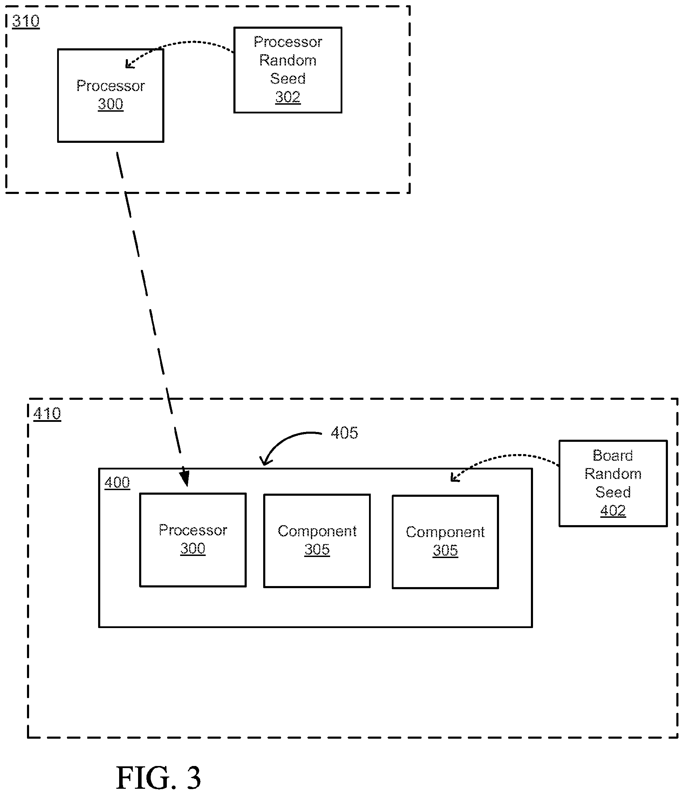

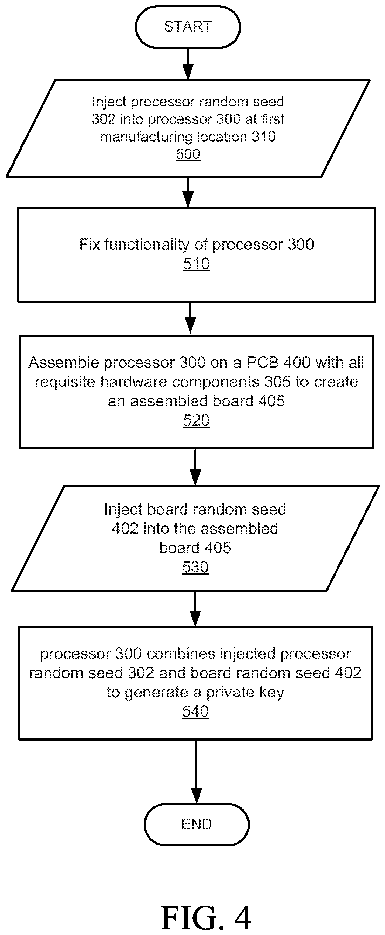

The communication device 100 also includes a connect module 144, and an information technology (IT) policy module 146. The connect module 144 implements the communication protocols that are required for the communication device 100 to communicate with the wireless infrastructure and any host system, such as an enterprise system, that the communication device 100 is authorized to interface with. Examples of a wireless infrastructure and an enterprise system are given in FIGS. 3 and 4, which are described in more detail below.

The connect module 144 includes a set of Application Programming Interfaces (APIs) that can be integrated with the communication device 100 to allow the communication device 100 to use any number of services associated with the enterprise system or with other systems accessible over the network 200. The connect module 144 allows the communication device 100 to establish an end-to-end secure, authenticated communication pipe with the host system. A subset of applications for which access is provided by the connect module 144 can be used to pass IT policy commands from the host system to the communication device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the communication device 100. These software applications can be third party applications, which are added after the manufacture of the communication device 100. Examples of third party applications include games, calculators, utilities, etc.

The additional applications can be loaded onto the communication device 100 through at least one of the wireless network 200, the auxiliary I/O subsystem 112, the data port 114, the short-range communications subsystem 122, or any other suitable device subsystem 124. This flexibility in application installation increases the functionality of the communication device 100 and can provide enhanced on-device functions, communication-related functions, or both. For example, secure communication applications can enable electronic commerce functions and other such financial transactions to be performed using the communication device 100.

The data port 114 enables a subscriber to set preferences through an external device or software application and extends the capabilities of the communication device 100 by providing for information or software downloads to the communication device 100 other than through a wireless communication network. The alternate download path can, for example, be used to load an encryption key onto the communication device 100 through a direct and thus reliable and trusted connection to provide secure device communication. The data port 114 can be any suitable port that enables data communication between the communication device 100 and another computing device. The data port 114 can be a serial or a parallel port. In some instances, the data port 114 can be a USB port that includes data lines for data transfer and a supply line that can provide a charging current to charge the battery 130 of the communication device 100.

The short-range communications subsystem 122 provides for communication between the communication device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 may be an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the communication device 100 is substantially similar, except that the received signals are output to the speaker 118, and signals for transmission are generated by the microphone 120. Alternative voice or audio I/O subsystems, such as a voice message recording subsystem, can also be implemented on the communication device 100. Although voice or audio signal output is accomplished primarily through the speaker 118, the display 110 can also be used to provide additional information such as the identity of a calling party, duration of a voice call, or other voice call related information.

FIG. 2 shows an exemplary block diagram of the communication subsystem component 104. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the communication device 100 is intended to operate. Thus, it should be understood that the design illustrated in FIG. 2 serves only as one example.

Signals received by the antenna 154 through the wireless network 200 are input to the receiver 150, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 can be adaptively controlled through automatic gain control algorithms implemented in the DSP 160.

The wireless link between the communication device 100 and the wireless network 200 can contain one or more different channels, typically different RF channels, and associated protocols used between the communication device 100 and the wireless network 200. An RF channel is a limited resource that should be conserved, typically due to limits in overall bandwidth and limited battery power of the communication device 100. When the communication device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods. Other communication subsystems, such as the WLAN communication subsystem 105 shown in FIG. 1, may be provided with similar components as those described above configured for communication over the appropriate frequencies and using the appropriate protocols.

Generally a computing device, such as for example the communication device 100 described above, may be manufactured by manufacturing individual hardware components, such as main processor 102, RAM 106, flash memory 108, etc., at separate component manufacturing locations.

The manufactured hardware components may be shipped from their respective component manufacturing locations to an assembly location for assembly and fixation onto a printed circuit board (PCB) or "board". The board provides both mechanical support and fixation of the hardware components as well as electrical connection between hardware components through conductive pathways printed or etched into the board. Once the hardware components have been assembled onto a board, the assembled board may be tested using a test appliance and firmware software instructions may be loaded onto the assembled board for execution by a processing unit such as the main processor 102.

A computing device such as communication device 100 often requires a secret value that is preferably statistically unique to the computing device, or at least has a low likelihood that other computing devices will share the same secret value. The secret value is typically a random number used to seed internal number generators, or form the basis for generating cryptographic keys used by the computing device during cryptographic operations such as encryption, decryption, digital signing, verification or the like.

A random number generator may be manufactured into the computing device, such as within the processing unit, for instance a hardware random number generator such as a ring oscillator. A random number generated by such a generator, may not be robust enough to be relied upon to produce random values suitable for use in a cryptographic operation. For instance, the random number generators of multiple processing units may have the tendency to produce the same value or values that fall within a relatively narrow selection of the full range of possible values due to manufacturing conditions. Accordingly, it is generally desired to actively insert or inject a secret random value into a hardware component, such as the processing unit, during the manufacturing process. In this way, the injected random value may be tested against other values injected into similar processing units to ensure the odds of a collision are relatively low.

Direct injection of the secret value at a manufacturing location, however, results in the manufacturing location having access to, or direct knowledge of, the secret value. A potential security risk would thus arise in situations where a computing device manufacturer has contracted manufacture of the hardware components and the assembly of the completed components onto a PCB to independent contract manufacturers as is typical in the electronics industry. The computing device manufacturer lacks assurance that the secret values will be protected as it lacks actual physical control over the steps within the manufacturing process that are carried out by independent manufacturers.

In an embodiment, a method of manufacturing a computing device allows the computing device to generate a secret value, such as a private key, where any one manufacturer does not have sufficient information to determine the secret value. Referring to FIG. 3, the method may include manufacturing a processor 300 and injecting a first random seed, indicated as a processor random seed 302 in FIG. 3, during the manufacturing process at a first manufacturing location 310. The processor random seed 302 may be hard coded into the processor 300 during the manufacturing process, or may be injected during a processing unit test procedure before the functionality of the processor 300 is fixed.

The completed processor 300, along with other hardware components 305 required for the computing device, may be shipped to a location for assembly on a printed circuit board (PCB or "board") 400 as is known in the art. Once the processor 300 and other hardware components 305 have been assembled with the board 400 creating an assembled board 405, a test appliance may be used to inject a second random seed, indicated as a board random seed 402 in FIG. 3, into the assembled board 405. The injection may occur at a second manufacturing location 410 that may comprise the location for assembly, a location for testing, or some other location that is a separate location from the first manufacturing location 310 where the processor random seed is injected or coded into the processor 300 during manufacture.

After injection of the board random seed 402, the processor 300 may then execute instructions to combine the processor random seed 302 and the board random seed 402 to generate a private key. The execution of instructions may conveniently occur at the second manufacturing location 410, or at some other location. Thus, the internally generated private key relies upon two seed values injected at different manufacturing locations 310 410. Each manufacturing location 310 410 having control over a seed value 302 402, but neither manufacturing location 310 410 able to determine the private key without at least obtaining information from the other manufacturing location.

Referring to FIG 4, the above process is summarised. The processor 300 is injected with a first random seed value, indicated as processor random seed 302, at a first manufacturing location 310 in step 500. The first manufacturing location 310 may comprise, for instance, a chip fabrication manufacturer.

The functionality of the processor 300 is fixed in step 510, for instance by blowing a fuse on the processor 300 to protect a one time programmable (OTP) memory within the processor 300 and disable a debugging interface (e.g. JTAG) of the processor 300.

The completed processor 300 may then be transported to a second manufacturing location 410 for assembly on the board 400 with the other hardware components 305 to create an assembled board 405 in step 520. A second random seed value, indicated as board random seed 402, may be injected into the assembled board 405 at a second manufacturing location 410 in step 530. The assembled board 405 may then be powered to enable the processor 300 to combine the injected first random seed value and second random seed value to generate a private key in step 540. The private key may comprise a kernel of random data that may be used as a seed by the processor 300 when generating future random numbers, for instance for cryptographic operations.

Typically, though not necessarily, the assembly at step 520, the injection at step 530 and the combination at step 540 will all occur at the same manufacturing location.

In an embodiment further aspects of the method may be introduced. In the embodiment, the processor 300 may further comprise a processor identifier. The processor identifier may comprise a string of characters that, preferably, uniquely identifies or differentiates each processor 300 from all of the processors 300 manufactured as part of the process. The processor identifier may be hard coded into the processor 300 during manufacture, for instance by writing the identifier into OTP memory. A list of identifiers assigned to processors 300 manufactured at a facility may be maintained to provide both a record of manufacture as well as an identifier for each processor 300.

In the embodiment, a processor 300 may be accessed by an appliance (a "processor appliance"), such as an Asset Management System (AMS) Appliance (not shown) that provides some level of functionality with the processor 300, though the processor 300 will not be fully functional since it has yet to be assembled with the board 400 and other hardware components 305. Similarly, the assembled board 405 may be connected to and accessed by a board appliance. The board appliance typically provides a higher level of functionality with the processor 300 since the processor 300 has been assembled on the board 400 with the requisite hardware components 305.

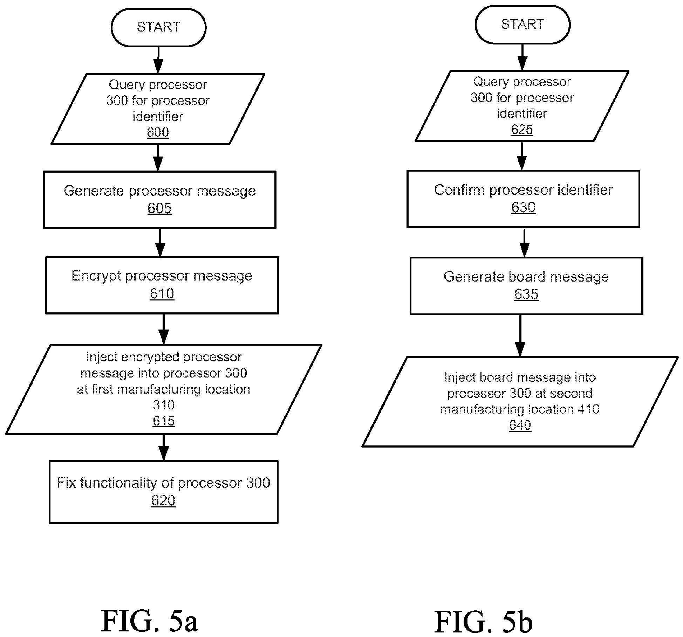

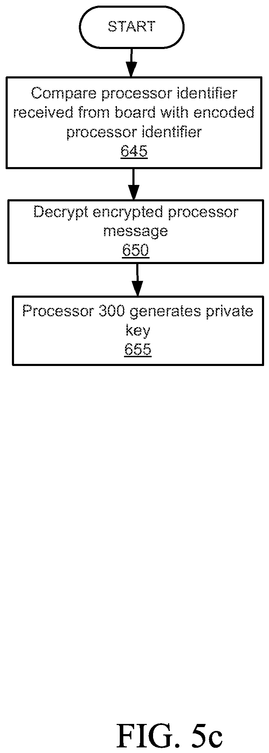

FIGS. 5a, 5b & 5c illustrate steps of the embodiment from a simplified perspective of the processor appliance, the board appliance and the processor 300 on the assembled board 405. FIG. 5a expands upon an embodiment of step 500 illustrated in FIG. 4 and FIG. 5b expands upon an embodiment of step 530 in FIG. 4 from the perspective of the board appliance. FIG. 5c expands upon an embodiment of step 530 in FIG. 4 from the perspective of operations performed by the processor 300. As will be appreciated, the appliances may further comprise computing devices, network connections, data stores and the like which are not specifically referenced here.

Referring to FIG. 5a, once connected to the processor appliance, the processor 300 may be queried for its processor identifier in step 600. The processor appliance may then generate a processor message comprising the processor identifier, the processor random seed 302 and optionally a processor digital signature generated by the processor appliance from the processor identifier and the processor random seed 302 in step 605. The processor appliance may then encrypt the processor message in step 610. In an aspect, the processor appliance may encrypt the processor message using a processor cryptographic key generated specifically for that processor 300. In the aspect, the processor cryptographic key may be stored by the processor appliance in association with the processor identifier. The processor appliance may then inject the encrypted processor message into the processor 300 in step 615. The location where the encrypted processor message is injected is a first manufacturing location 310. The functionality of the processor 300 may be fixed in step 620 as described above.

Information relating to the encrypted processor message may be stored by the processor appliance. The processor identifier, processor cryptographic key, and processor digital signature if used, may be associated with one another and forwarded on to a second manufacturing location 410.

Referring to FIG. 5b, at the second manufacturing location 410, the assembled board 405 including the processor 300 may be connected to the board appliance. Once connected to the board appliance, the processor 300 may be queried for its processor identifier in step 625. The board appliance may then generate a board message consisting of the processor identifier, the board random seed 402, the processor cryptographic key received from the first manufacturing location 310 and optionally a board digital signature generated from the processor identifier, the board random seed 402 and the processor cryptographic key in step 635. The board appliance may then inject the board message into the processor 300 at a second manufacturing location 410 in step 640. The processor 300 is functional at the second manufacturing location 410 as it has been assembled with other requisite hardware components 305 onto the board 400.

Referring to FIG. 5c, the processor 300 may perform a check that the processor identifier received in the board message matches a value of the processor identifier encoded within the processor 300 itself in step 645. In step 650, the processor 300 may decrypt the encrypted processor message that was injected in step 615 at the first manufacturing location 310 using the processor cryptographic key injected in step 635 at the second manufacturing location 410. In embodiments where a processor digital signature was included in the encrypted processor message, the processor 300 may verify the processor digital signature. In embodiments where a board digital signature was included in the board message, the processor 300 may verify the board digital signature. If any of the processor identifier, processor digital signature or board digital signature fail to be verified, the processor 300 may halt the process and return an ERROR code to the board appliance. As will be appreciated, step 645 may occur after 650, for instance as part of a general verification step where all checking and verification occurs.

In an aspect of an embodiment where a processor digital signature was included in the encrypted processor message, the processor 300 may output the processor digital signature to the board appliance after step 650. The board appliance may then compare the output processor digital signature received from the processor 300 with the processor digital signature and associated processor identifier received from the first manufacturing location 310. This aspect allows the second manufacturing location 410 to confirm that the processor 300 was authentically programmed at the first manufacturing location 310. If the confirmation fails, the board appliance can halt the process, issue an ERROR code and flag the processor 300 for review/reject.

The processor 300 may generate a private key value from the processor random seed 302 and the board random seed 402 in step 655. In an aspect, the processor 300 may further supplement the two random seed values with an internally generated random or pseudorandom value to generate the private key. For instance, the processor 300 may generate the random value using a random number generator such as a ring oscillator manufactured into the processor 300 at the first manufacturing location 310.

The processor 300 may generate the private key by combining the values according to known methods, for instance by performing an XOR operation (masking) to combine values of equal length, or by concatenating the processor random seed 302 and the board random seed 402 and XOR'ing the concatenated result with the random value ((processor random value || board random value) XOR random value) where the concatenated result is the same length as the random value.

In an aspect, the private key may be generated as an output of a key derivation operation or a cryptographic hash operation with the processor random seed 302, the board random seed 402 and optionally the random value as inputs to the function.

In the aspect where a random value is included, even knowledge of both seed values would not allow direct computation of the private key since the processor 300 combines the injected processor seed value and board seed value with the random value that is generated by, and known only to, the processor 300.

The generated private key provides a kernel of randomness that may be directly used as a private cryptographic key, or may comprise a cryptographic seed from which cryptographic keys are generated by the processor 300. In an aspect, the private key may comprise a cryptographic seed for a pseudo random number generator executed by the processor 300. The private key may be stored off the processor 300 in a data store of the assembled board, for instance the private key may be stored securely by the processor 300 encrypting the private key with a generated private cryptographic key and storing the encrypted private key in the data store.

The processor 300 may use the private key in other cryptographic operations, for instance to create a processor specific private-public key pair. Accordingly, in an embodiment step 655 may further comprise generating a public key from the private key. In an aspect, the key pair may comprise an elliptic curve cryptography (ECC) key pair. The public key may be computed, for instance, as the product of the private key with a base point for an elliptic curve parameter set.

After the processor 300 generates the private-public key pair in step 655, the board appliance may verify that the private-public key generation was successful. In an aspect, after generating the private-public key pair in the embodiment of step 655, the processor 300 may further generate a key message comprising the processor identifier, the public key, the processor digital signature and the board random seed 402. The processor 300 may digitally sign the key message using the private key to generate a key digital signature. The processor 300 may output the key message and the key digital signature to the board appliance.

The board appliance may receive the key message and the key digital signature, extract the public key from the key message and verify the key digital signature on the key message. After verifying the key digital signature, the board appliance has verification that a private-public key pair was successfully established by the processor 300. If the key digital signature is not verified, the board appliance may return an ERROR code and flag the processor 300 for review/reject.

Various embodiments of the present invention having been thus described in detail by way of example, it will be apparent to those skilled in the art that variations and modifications may be made without departing from the invention. For instance, the invention may be implemented on different computing form factors beyond the exemplary communication device 100 described above. The invention includes all such variations and modifications as fall within the scope of the appended claims.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

## Claims

1. A method for manufacturing a computing device comprising:
injecting (500) a processor random seed (302) into a processing unit (300) at a first manufacturing location (310);
assembling (520) the processing unit (300) and other hardware components (305) with a printed circuit board PCB (400) to create an assembled board (405) at a second manufacturing location (410);
injecting (530) a board random seed (402) into the assembled board (405) at the second manufacturing location (410); and,
the processing unit (300) combining (540) the processor random seed and the board random seed to generate a private key, wherein the private key is an internally generated private key which relies on two random seed values injected at different manufacturing locations (310, 410), and wherein
the injecting (500) at the first manufacturing location comprises:
connecting the processing unit (300) to a processor appliance, wherein the processor appliance is configured to access the processing unit (300) and to provide some level of functionality with the processing unit (300) prior to assembly of the processing unit (300) to the assembled board (405) at the second manufacturing location (410);
querying (600) the processing unit (300) for a processor identifier;
generating (605) the processor random seed (302);
combining the processor random seed and the processor identifier to generate a processor message;
encrypting (610) the processor message with a processor cryptographic key; injecting (615) the encrypted processor message into the processing unit; and,
fixing (620) a functionality of the processing unit, comprising protecting a one time programmable memory within the processor by blowing a fuse on the processor; and
the injecting at the second manufacturing location (410) comprises:
connecting the assembled board (405) to a board appliance, wherein the board appliance is configured to access the assembled board and to provide functionality with the processing unit (300) assembled on the board;
querying (625) the processing unit (300) for a processor identifier;
comparing (630) the processor identifier with a list of validated processor identifiers received from the first manufacturing location and if the processor identifier matches a validated processor identifier, generating (635) the board random seed and combining the board random seed and the processor identifier to generate a board message, and
injecting (640) the board message into the processing unit on the assembled board; and the processing unit (300) decrypting (650) the encrypted processor message with the processor cryptographic key, verifying that the processor identifier received in the board message matches the processor identifier of the processing unit and, if the processor identifier is matched, the processing unit combining the processor random seed and the board random seed to generate (655) the private key.

2. The method of claim 1 further comprising, the processing unit storing the private key.

3. The method of claim 1 wherein the processing unit (300) combines the processor random seed (302) and the board random seed (402) by generating a random value and combining the random value with the processor random seed and the board random seed.

4. The method of claims 1 to 3 wherein after the processing unit (300) generates the private key, the processing unit stores the private key either within a data store of the processing unit or in a secure data store of the assembled board.

5. The method of claim 1 wherein the injecting at the first manufacturing location further comprises:
generating a processor digital signature based on the processor random seed and the processor identifier; wherein the combining combines the processor random seed, the processor identifier and the processor digital signature to generate the processor message; and wherein injecting injects the encrypted processor message and the processor cryptographic key into the processing unit.

6. The method of claim 5 wherein the injecting at the second manufacturing location further comprises:
the combining of the board random seed and the processor identifier further combines the processor cryptographic key to generate the board message; and the processing unit verifying the processor digital signature, and if the processor identifier and the processor digital signature are verified, the processing unit combining the processor random seed and the board random seed to generate the private key.

7. The method of claim 6 wherein if the processor identifier and the processor digital signature are not verified, the processing unit returning an error code to the board appliance.

8. The method of any one of claims 1 to 7 wherein the combining the processor random seed and the board random seed to generate a private key comprises the processor applying the processor random seed and the board random seed as inputs to one of an XOR operation, a concatenation operation, a key derivation function or a cryptographic hash operation, the output comprising the private key.

9. The method of claims 1 to 8 wherein the method further comprises the processing unit generating a cryptographic key for a cryptographic operation using the generated private key as a cryptographic seed for input to a cryptographic key generation operation.

10. The method of claim 9 wherein the cryptographic key generation operation comprises a pseudo random number generator.

11. The method of claim 9 further comprising the processing unit encrypting the private key using the generated cryptographic key and storing the encrypted private key on a data store of the computing device.

12. The method of claim 9 wherein the cryptographic operation comprises a public key generation operation.

13. A computing device manufactured using the method of any one of claims 1 to 12.

## Patentansprüche

1. Verfahren zur Herstellung einer Rechenvorrichtung, das Folgendes umfasst:
Eingeben (500) eines zufälligen Prozessor-Ausgangswerts (302) in eine Verarbeitungseinheit (300) an einem ersten Herstellungsort (310);
Montage (520) der Verarbeitungseinheit (300) und anderer Hardware-Komponenten (305) auf einer Leiterplatte PCB (400) um eine montierte Platte (405) an einem zweiten Herstellungsort (410) zu erstellen;
Eingeben (530) eines zufälligen Platten-Ausgangswerts (402) in die montierte Platte (405) an dem zweiten Herstellungsort (410); und
Kombinieren (540) des zufälligen Prozessor-Ausgangswerts und des zufälligen Platten-Ausgangswerts durch die Verarbeitungseinheit (300), um einen geheimen Schlüssel zu erzeugen, wobei der gemeine Schlüssel ein intern erzeugter geheimer Schlüssel ist, der von zwei zufälligen Ausgangwerten abhängt, die an verschiedenen Herstellungsorten (310, 410) eingegeben werden; und wobei
das Eingeben (500) an dem ersten Herstellungsort Folgendes umfasst:
Verbinden der Verarbeitungseinheit (300) mit einer Prozessoreinrichtung, wobei die Prozessoreinrichtung konfiguriert ist, um auf die Verarbeitungseinheit (300) zuzugreifen und einen gewissen Grad von Funktionalität mit der Verarbeitungseinheit (300) bereitzustellen, bevor die Verarbeitungseinheit (300) am zweiten Herstellungsort (410) auf der montierten Platte (405) montiert wird;
Abfragen (600) der Verarbeitungseinheit (300) nach einer Prozessor-Kennung;
Erzeugen (605) des zufälligen Prozessor-Ausgangswerts (302);
Kombinieren des zufälligen Prozessor-Ausgangswerts und der Prozessor-Kennung, um eine Prozessor-Nachricht zu erzeugen;
Verschlüsseln (610) der Prozessor-Nachricht mit einem kryptographischen Prozessor-Schlüssel;
Eingeben (615) der verschlüsselten Prozessor-Nachricht in die Verarbeitungseinheit; und
Fixieren (620) einer Funktionalität der Verarbeitungseinheit, umfassend ein Schützen eines einmalig programmierbaren Speichers innerhalb des Prozessors durch ein Auslösen einer Sicherung an dem Prozessor; und
das Eingeben an dem zweiten Herstellungsort (410), das Folgendes umfasst:
Verbinden der montierten Platte (405) mit einer Platteneinrichtung; wobei die Platteneinrichtung konfiguriert ist, um auf die montierte Platte zuzugreifen und eine Funktionalität mit der Verarbeitungseinheit (300) bereitzustellen, die an der Platte montiert ist;
Abfragen (625) der Verarbeitungseinheit (300) nach einer Prozessor-Kennung;
Vergleichen (630) der Prozessor-Kennung mit einer Liste von validierten Prozessor-Kennungen, empfangen an dem ersten Herstellungsort und, wenn die Prozessor-Kennung mit einer validierten Prozessor-Kennung übereinstimmt, Erzeugen (635) des zufälligen Platten-Ausgangswerts und Kombinieren des zufälligen Platten-Ausgangswerts mit der Prozessor-Kennung, um eine Platten-Nachricht zu erzeugen; und
Eingeben (640) der Platten-Nachricht in die Verarbeitungseinheit auf der montierten Platte und;
Entschlüsseln (650) der verschlüsselten Prozessor-Nachricht mit dem kryptographischen Prozessor-Schlüssel durch die Verarbeitungseinheit (300),
Verifizieren, dass die in der Platten-Nachricht empfangene Prozessor-Kennung mit der Prozessor-Kennung der Verarbeitungseinheit übereinstimmt und, wenn die Prozessor-Kennung übereinstimmt, Kombinieren des zufälligen Prozessor-Ausgangswertes und des zufälligen Platten-Ausgangwertes durch die Verarbeitungseinheit, zum Erzeugen (655) des geheimen Schlüssels.

2. Verfahren nach Anspruch 1 ferner umfassend, das Speichern des geheimen Schlüssels durch die Verarbeitungseinheit.

3. Verfahren nach Anspruch 1, wobei die Verarbeitungseinheit (300) den zufälligen Prozessor-Ausgangswert (302) und den zufälligen Platten-Ausgangswert (402) durch Folgendes kombiniert: Erzeugen eines zufälligen Wertes und Kombinieren des zufälligen Wertes mit dem zufälligen Prozessor-Ausgangswert und dem zufälligen Platten-Ausgangswert.

4. Verfahren nach einem der Ansprüche 1 bis 3, wobei nachdem die Verarbeitungseinheit (300) den geheimen Schlüssel erzeugt, die Verarbeitungseinheit den geheimen Schlüssel entweder innerhalb eines Datenspeichers der Verarbeitungseinheit oder in einem sicheren Datenspeicher der montierten Platte speichert.

5. Verfahren nach Anspruch 1, wobei das Eingeben an dem ersten Herstellungsort ferner umfasst:
Erzeugen einer digitalen Prozessor-Struktur auf Grundlage des zufälligen Prozessor-Ausgangswerts und der Prozessor-Kennung;
wobei das Kombinieren den zufälligen Prozessor-Ausgangswert, die Prozessor-Kennung und die digitale Prozessor-Struktur kombiniert, um die Prozessor-Nachricht zu erzeugen;
wobei beim Eingeben die verschlüsselte Prozessor-Nachricht und der kryptographische Prozessor-Schlüssel in die Verarbeitungseinheit eingegeben werden.

6. Verfahren nach Anspruch 5, wobei das Eingeben an dem zweiten Herstellungsort ferner umfasst:
das Kombinieren des zufälligen Platten-Ausgangswerts und der Prozessor-Kennung kombiniert ferner den kryptographischen Prozessor-Schlüssel zum Erzeugen der Platten-Nachricht; und
Verifizieren der digitalen Prozessor-Struktur durch die Verarbeitungseinheit, und, wenn die Prozessor-Kennung und die digitale Prozessor-Struktur verifiziert sind, kombinieren des zufälligen Prozessor-Ausgangswerts und des zufälligen Platten-Ausgangswerts durch die Verarbeitungseinheit, um den geheimen Schlüssel zu erzeugen.

7. Verfahren nach Anspruch 6, wobei, wenn die Prozessor-Kennung und die digitale Prozessor-Struktur nicht verifiziert werden, die Verarbeitungseinheit einen Fehler-Code an die Platteneinrichtung zurücksendet.

8. Verfahren nach einem der Ansprüche 1 bis 7, wobei das Kombinieren des zufälligen Prozessor-Ausgangswerts und des zufälligen Platten-Ausgangswerts zum Erzeugen eines geheimen Schlüssels das Anwenden des zufälligen Prozessor-Ausgangswerts und des zufälligen Platten-Ausgangswerts als Eingaben an eines von einer XOR-Operation, einem Konzentrierungsvorgang, einer Schlüsselableitungsfunktion oder einer kryptographischen Hash-Operation umfasst, wobei die Ausgabe den geheimen Schlüssel umfasst.

9. Verfahren nach einem der Ansprüche 1 bis 8, wobei das Verfahren das Erzeugen eines kryptographischen Schlüssels durch den Prozessor für eine kryptographische Operation unter Verwendung des erzeugten geheimen Schlüssels als einen kryptographischen Ausgangswert als Eingang in eine kryptographische Schlüsselerzeugungsoperation umfasst.

10. Verfahren nach Anspruch 9, wobei die kryptographische Schlüsselerzeugungsoperation einen Pseudozufallszahlengenerator umfasst.

11. Verfahren nach Anspruch 9, das ferner Folgendes umfasst: Verschlüsseln des geheimen Schlüssels durch die Verarbeitungseinheit unter Verwendung des erzeugten kryptographischen Schlüssels und Speichern des verschlüsselten geheimen Schlüssels auf einem Datenspeicher der Rechenvorrichtung.

12. Verfahren nach Anspruch 9, wobei die kryptographische Operation eine Operation zum Erzeugen eines Public Key umfasst.

13. Rechenvorrichtung, hergestellt unter Verwendung des Verfahrens nach einem der Ansprüche 1 bis 12.

## Revendications

1. Procédé de fabrication d'un dispositif informatique comprenant :
l'injection (500) d'un germe aléatoire de processeur (302) dans une unité de traitement (300) à un premier emplacement de fabrication (310) ;
l'assemblage (520) de l'unité de traitement (300) et d'autres composants matériels (305) avec une carte de circuit imprimé PCB (400) pour créer une carte assemblée (405) à un second emplacement de fabrication (410) ;
l'injection (530) d'un germe aléatoire de carte (402) dans la carte assemblée (405) au second emplacement de fabrication (410) ; et,
la combinaison (540) par l'unité de traitement (300) du germe aléatoire de processeur et du germe aléatoire de carte pour générer une clé privée, dans lequel la clé privée est une clé privée générée en interne qui s'appuie sur deux valeurs de germe aléatoire injectées à des emplacements de fabrication (310, 410) différents, et dans lequel
l'injection (500) au premier emplacement de fabrication comprend :
le raccordement de l'unité de traitement (300) à un appareil de processeur, dans lequel l'appareil de processeur est configuré pour accéder à l'unité de traitement (300) et pour fournir un certain niveau de fonctionnalité avec l'unité de traitement (300) avant assemblage de l'unité de traitement (300) à la carte assemblée (405) au second emplacement de fabrication (410) ;
l'interrogation (600) de l'unité de traitement (300) en ce qui concerne un identifiant de processeur ;
la génération (605) du germe aléatoire de processeur (302) ;
la combinaison du germe aléatoire de processeur et de l'identifiant de processeur pour générer un message de processeur ;
le chiffrement (610) du message de processeur avec une clé cryptographique de processeur ;
l'injection (615) du message de processeur chiffré dans l'unité de traitement ; et,
la fixation (620) d'une fonctionnalité de l'unité de traitement, comprenant la protection d'une mémoire programmable une fois au sein du processeur en faisant sauter un fusible sur le processeur ; et
l'injection au second emplacement de fabrication (410) comprend :
le raccordement de la carte assemblée (405) à un appareil de carte, dans lequel l'appareil de carte est configuré pour accéder à la carte assemblée et pour fournir une fonctionnalité avec l'unité de traitement (300) assemblée sur la carte ;
l'interrogation (625) de l'unité de traitement (300) en ce qui concerne un identifiant de processeur ;
la comparaison (630) de l'identifiant de processeur à une liste d'identifiants de processeur validés reçus en provenance du premier emplacement de fabrication et si l'identifiant de processeur concorde avec un identifiant de processeur validé, la génération (635) du germe aléatoire de carte et la combinaison du germe aléatoire de carte et de l'identifiant de processeur pour générer un message de carte, et
l'injection (640) du message de carte dans l'unité de traitement sur la carte assemblée ; et
le déchiffrement (650) par l'unité de traitement (300) du message de processeur chiffré avec la clé cryptographique de processeur,
la vérification que l'identifiant de processeur reçu dans le message de carte concorde avec l'identifiant de processeur de l'unité de traitement et, si l'identifiant de processeur concorde, la combinaison par l'unité de traitement du germe aléatoire de processeur et du germe aléatoire de carte pour générer (655) la clé privée.

2. Procédé selon la revendication 1, comprenant en outre le stockage par l'unité de traitement de la clé privée.

3. Procédé selon la revendication 1, dans lequel l'unité de traitement (300) combine le germe aléatoire de processeur (302) et le germe aléatoire de carte (402) en générant une valeur aléatoire et en combinant la valeur aléatoire avec le germe aléatoire de processeur et le germe aléatoire de carte.

4. Procédé selon les revendications 1 à 3, dans lequel, après que l'unité de traitement (300) génère la clé privée, l'unité de traitement stocke la clé privée soit dans un magasin de données de l'unité de traitement, soit dans un magasin de données sécurisé de la carte assemblée.

5. Procédé selon la revendication 1, dans lequel l'injection au premier emplacement de fabrication comprend en outre :
la génération d'une signature numérique de processeur d'après le germe aléatoire de processeur et l'identifiant de processeur ;
dans lequel la combinaison combine le germe aléatoire de processeur, l'identifiant de processeur, et la signature numérique de processeur pour générer le message de processeur ; et
dans lequel l'injection injecte le message de processeur chiffré et la clé cryptographique de processeur dans l'unité de traitement.

6. Procédé selon la revendication 5, dans lequel l'injection au second emplacement de fabrication comprend en outre :
la combinaison du germe aléatoire de carte et l'identifiant de processeur combine en outre la clé cryptographique de processeur pour générer le message de carte ; et
la vérification par l'unité de traitement de la signature numérique de processeur, et si l'identifiant de processeur et la signature numérique de processeur sont vérifiés, la combinaison par l'unité de traitement du germe aléatoire de processeur et du germe aléatoire de carte pour générer la clé privée.

7. Procédé selon la revendication 6, dans lequel, si l'identifiant de processeur et la signature numérique de processeur ne sont pas vérifiés, le renvoi par l'unité de traitement d'un code d'erreur à l'appareil de carte.

8. Procédé selon l'une quelconque des revendications 1 à 7, dans lequel la combinaison du germe aléatoire de processeur et du germe aléatoire de carte pour générer une clé privée comprend l'application par le processeur du germe aléatoire de processeur et du germe aléatoire de carte en tant qu'entrées dans l'une d'une opération OU EXCLUSIF, d'une opération de concaténation, d'une fonction de dérivation de clé ou d'une opération de hachage cryptographique, la sortie comprenant la clé privée.

9. Procédé selon les revendications 1 à 8, dans lequel le procédé comprend en outre la génération par l'unité de traitement d'une clé cryptographique pour une opération cryptographique à l'aide de la clé privée générée en tant que germe cryptographique pour une entrée dans une opération de génération de clé cryptographique.

10. Procédé selon la revendication 9, dans lequel l'opération de génération de clé cryptographique comprend un générateur de nombre pseudo-aléatoire.

11. Procédé selon la revendication 9, comprenant en outre le chiffrement par l'unité de traitement de la clé privée à l'aide de la clé cryptographique générée et le stockage de la clé privée chiffrée sur un magasin de données du dispositif informatique.

12. Procédé selon la revendication 9, dans lequel l'opération cryptographique comprend une opération de génération de clé publique.

13. Dispositif informatique fabriqué à l'aide du procédé de l'une quelconque des revendications 1 à 12.
